# EUROPEAN PATENT SPECIFICATION

(11) **EP 1 731 011 B1**
(45) Date of publication and mention of the grant of the patent: **11.03.2009**
(21) Application number: 06445037.2
(22) Date of filing: 02.06.2006
(51) Int. Cl.: A01B 51/04

(54) **Agricultural tool holder**
Landwirtschaftlicher Werkzeugrahmen
Machine agricole comportant un cadre support d'outils

(30) Priority: 07.06.2005 SE 0501301
(43) Date of publication of application: 13.12.2006
(73) Proprietor: Askling, Lars, 590 33 Borensberg (SE)
(72) Inventor: Askling, Lars, 590 33 Borensberg (SE)
(74) Representative: Berglund, Erik Wilhelm

(56) References cited:
- CH-A- 307 230
- DE-A1- 19 529 540
- DE-B- 1 122 311
- FR-A- 2 787 284
- US-A- 4 539 921
- US-A- 4 624 197

## Description

In order to make farming more rational increasingly more advanced machines are fabricated and hence to ever increasing costs. In order to stand these increasing machine costs it is necessary that each machine is used on an ever increasing acreage either by people driving for each other or making the agricultural units increasingly larger. The object of the invention is to contribute to an alternative to the above development.

A previous attempt to achieve such machine is described in FR-A-2 787 824. This publication describes a sowing machine with a hopper for seed that is moveable lengthwise of the machine. It has parallelogram suspensions for tool holders with wheels. The tool holders have parallel swing arms arranged with their journal points vertically above each other in a bracket fastened to a transversal beam. Height adjustment for the tools is with the lower arms of the tractor and a double acting piston adjusting the height rear wheels.

The invention concerns a tool carrier with precision holders making different working operations possible and that therefor can be provided with different tools, for instance in the shape of different tools or tool means for sowing, weed fighting, putting fertilizers in the ground etc in accordance with claim 1.

Since the same machine is used for more than one type of work the cost is distributed over a greater acreage than for instance for a traditional sowing machine that only can sow. Furthermore several of types of work are distributed over the year which provides an increased acreage for calculation.

The tool carrier according to the invention can be put together to great widths if so is desired and makes possible a simple adjustment between different types of work. The precision movement for each suspending device will be very good which makes it possible to sow with extremely little lateral variation for each sow-share. This in turn improves the conditions for mechanical weed fighting between sow lines. A rational and economical handling is made possible by the invention and in particular the conditions for ecological cultivation are improved by the use of a tool carrier for several different types of work at different occasions or stages in the cultivation.

Advantageously the invention can be used together with a precision control for the following of the sown rows.

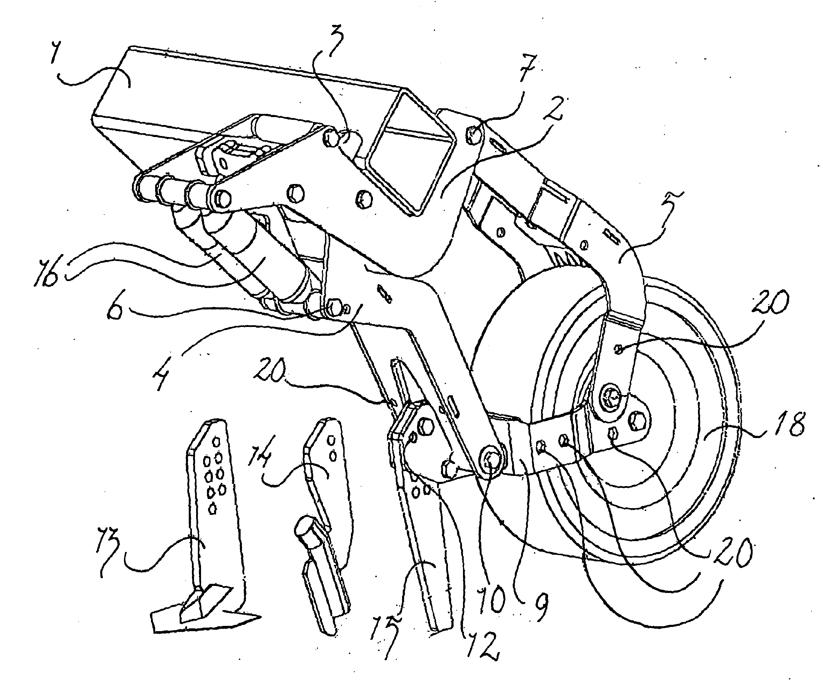

Further advantages and characteristics of advantageous further developments of the invention are apparent from the subclaims as well as from the following description of an advantageous embodiment of the invention with reference to the enclosed drawing.

The tool carrier shown in the drawing comprise a square beam 1 crosswise arranged, in relation to the direction of movement (to the left at use), said beam being supported in the front or rear end of a tractor or towing unit. On the beam a supporting unit is clamped fast with a hook-shaped mounting part 2 and a clamp means 3 free from play on the square beam. Two swing arms, a front 4 and a rear one 5 are journaled at 6 and 7 respectively in the mounting part 2. Both arms consist of sides and a connecting middle part so that high bending and torsional strength is obtained.

The arms 4 and 5 are in the lower ends journaled in an extended tool holder 9 at 10 and 11. The distance between the pivot points 6, 7 and 10, 11 respectively are essentially the same. Also the distance between the journal points of each arm is essentially the same. The tool holder is in its front end provided with bolt holes 12 for the fastening of tools 13, 14 and 15 respectively for weed hacking between sown rows, sowing and crust-breaking respectively and in the rear end a wheel 18 is joumaled.

In the front one 4 of the swing arms two springs 16 are fastened extending to a crosswise arranged bolt 17 in the mounting part 2.

The suspension device of the tool carrier is in the drawing shown in a working position, in which the wheel is in contact with the ground and pressed against this by the weight of the device. If more force is needed to press the tools down into the ground one can consider the tractor via an hydraulic cylinder pressing the device additionally against the ground alternately that force is added from additional means. The springs 16 take up the downwards pressing force. If one wish to increase the depth of the tool the bean 1 is turned anti-clockwise so that the wheel is located higher in relation to the tool and at the same time the tip of for instance a hoe is turned downwards so that an increased ground seeking is obtained, that is the hoe is pulled downwards by the movement forwards. The turning of the beam alters the depth adjustment for all suspension devices mounted on the beam and their tools.

The working depth of the tool in the tool holder as adjusted by the turning of the beam or mounting of the tool is not influenced by the size of the force pressing the toolholder downwards since at a lowering wheel and tool move in parallel. This guarantee that the working depths over the width of the machine can be held identical also when the ground is uneven.

If the tool hits a rock that does not move the tool, the tool holder and wheel are pressed backwards and with an increasing lifting until the tool can pass over the rock. During this movement the springs are extended and their spring force increase. At the same time however the fastening point of the springs in the front swing arm is lifted so that the effective lever of the springs is reduced. The result is that the resistance against a swinging out of the way of an obstacle, for instance in the shape of rock, do not increase so much that damages are caused or that the entire line of suspension devices fastened in the beam bounce.

The tool holder is as the swing arms provided with additional fastening holes 20. The fastening holes may be used for the fastening of additional tools to the side of or behind the tool holder for additional working. One can even consider to use the relative movements to achieve moveable tools or means that are driven by the movement that result when the entire toolcarrier is lifted up. For instance tool cleaning means can each time that the tool carrier is lifted up scrape off mud and organic material that have stuck to a tool. If the tools are sharp one can even consider the cleaning means functioning as a protection when the tool carrier is lifted. At the spreading of fertilizer between the sow rows the outlet tube can be cleaned every time that the tool carrier is lifted up reducing the risk of clogging as well as closing the outlets to prevent undesired spillage.

## Claims

1. Tool carrier for agricultural machines including a suspension device with a wheel (18) for the contact with the ground and one or several tool holders that jointly are suspended in parallel, the wheel is journalled in the tool holder (9) or an extension thereof that via two swing arms (4, 5) is journalled in a mounting device (2, 3) for the suspension device so that a parallelogram suspension is achieved, with the swing arms extending backwards downwards from the mounting device, the mounting device (2, 3) is fastened to a beam (1) arranged crosswise relative to the direction of movement, on which beam several suspension devices may be mounted, **characterized in** one or several springs (16) being arranged between one of the swing arms and the mounting device and effective for pulling the toolholder forwards, downwards in the driving direction, in the travel direction the wheel is behind the tool holder and the beam is further turnable so that through a turning of the beam (1) the inclination of the tool holder (9) may be changed in turn altering the relation heightwise between wheel and tool (13; 14; 15) for changing work depth.

2. Tool carrier according to claim 1, **characterized in that** the springs (16) are so arranged at the swing arm (4) that at movement of the tool holder backwards from the work position the lever of the spring or springs is reduced, counteracting the increase in spring force that result from the spring extension so that the required forces at stone release will be moderate and allow a gentle swinging away of the tool.

3. Tool carrier according to any of the preceding claims, **characterized in that** the tool holder as well as corresponding tools have several mounting holes that can cooperate with the turning of the beam to allow different mounting angles and depths.

4. Tool carrier according to any of the preceding claims, **characterized in that** the swing arms (4, 5) have I- and/or U-shaped profiles so that great rigidity is obtained.

5. Tool carrier, **characterized in that** the tool holder includes bolt holes or other fastening possibilities for completing tools laterally of and/or behind holder or wheel.

6. Tool carrier according to any of the preceding claims, **characterized in that** it is provided with means making use of the movement between the different parts in order to achieve, at lifting of the tool carrier movements for instance for the cleaning of tools and/or closing of openings in these.

7. Tool carrier according to any of the preceding claims, **characterized in** the swing arms (4, 5) being arranged after each other in the travel direction of the tool carrier.

## Patentansprüche

1. Werkzeugträger für landwirtschaftliche Maschinen, welcher eine Aufhängeeinrichtung mit einem Rad (18) zum Kontakt mit dem Untergrund und ein oder mehrere Werkzeughalter umfasst, welche im Verbund parallel hängend angeordnet sind, wobei das Rad am Werkzeughalter (9) oder einer Verlängerung desselben gelagert ist, welche über zwei Schwenkarme (4, 5) an einer Befestigungseinrichtung (2, 3) für die Aufhängeeinrichtung derart gelagert ist, dass man eine parallelogrammförmige Aufhängung erhält, wobei die Schwenkarme von der Befestigungseinrichtung nach hinten und unten weisen, und wobei die Befestigungseinrichtung (2, 3) an einem Träger (1) befestigt ist, welcher in Querrichtung bezüglich der Bewegungsrichtung angeordnet ist, auf welchem Träger mehrere Aufhängeeinrichtungen angebracht sein können, **dadurch gekennzeichnet, dass** ein oder mehrere Federn (16) zwischen einem der Schwenkarme und der Befestigungseinrichtung angeordnet ist oder sind und derart wirken, dass der Werkzeughalter in Bewegungsrichtung in Richtung nach vorne und unten gesehen in Bewegungsrichtung des Rades gezogen wird, welches sich hinter dem Werkzeughalter befindet, und dass der Träger ferner derart drehbar ist, dass durch eine Verdrehung des Trägers (1) die Neigung des Werkzeughalters (9) verändert werden kann, und hiermit auch die Bezugshöhe zwischen dem Rad und dem Werkzeug (13; 14; 15) zur Veränderung der Arbeitstiefe verändert werden kann.

2. Werkzeugträger nach Anspruch 1, **dadurch gekennzeichnet, dass** die Federn (16) derart an dem Schwenkarm (4) angebracht sind, dass bei einer Bewegung des Werkzeughalters von der Arbeitsposition nach hinten der Hebel der Feder oder der Federn reduziert wird, wodurch einer Zunahme der Federkraft entgegengewirkt wird, welche aus der Federverlängerung resultiert, so dass die bei einem Ablösen von Steinen erforderlichen Kräfte mittelmäßig sind, und eine sanfte Wegschwenkung des Werkzeugs ermöglicht.

3. Werkzeugträger nach einem der vorangehenden Ansprüche, **dadurch gekennzeichnet, dass** der Werkzeughalter sowie die zugeordneten Werkzeuge mehrere Befestigungsöffnungen besitzen, die mit dem Verdrehen des Trägers zusammen arbeiten können, und unterschiedliche Befestigungswinkel und -tiefen einstellen zu können.

4. Werkzeugträger nach einem der vorangehenden Ansprüche, **dadurch gekennzeichnet, dass** die Schwenkarme (4, 5) I- und/oder U-förmige Profile haben, so dass sie eine große Steifigkeit besitzen.

5. Werkzeugträger, **dadurch gekennzeichnet, dass** der Werkzeughalter Bolzenöffnungen oder andere Befestigungsmöglichkeiten umfasst, um die Werkzeuge seitlich vor und/oder hinter dem Halter oder Rad zu vervollständigen.

6. Werkzeugträger nach einem der vorangehenden Ansprüche, **dadurch gekennzeichnet, dass** Einrichtungen vorgesehen sind, welche die Bewegung zwischen den unterschiedlichen Teilen ausnutzen, um bei einer Hubbewegung der Werkzeugträgerbewegung das Reinigen der Werkzeuge und/oder das Schließen von Öffnungen zu ermöglichen.

7. Werkzeugträger nach einem der vorangehenden Ansprüche, **dadurch gekennzeichnet, dass** die Schwenkarme (4, 5) in Bewegungsrichtung des Werkzeugträgers hintereinander angeordnet sind.

## Revendications

1. Support d'outils pour des machines agricoles, comprenant un dispositif de suspension comprenant une roue (13), pour le contact avec le sol, et un ou plusieurs porte-outils, suspendus conjointement en parallèle, la roue étant montée à rotation dans le porte-outil (9) ou une extension de celui-ci, qui, via deux bras oscillants (4, 5) est monté à rotation dans un dispositif de montage (2, 3) pour le dispositif de suspension, de manière à obtenir une suspension à parallélogramme, les bras oscillant s'étendant, vers l'arrière et le bas, depuis le dispositif de montage, le dispositif de montage (2, 3) est fixé à une poutre (1) agencée transversalement à la direction de déplacement, poutre sur laquelle plusieurs dispositifs de suspension peuvent être montés, **caractérisé par** un ou plusieurs ressorts (16), agencés entre l'un des bras oscillants et le dispositif de montage et agissant pour tirer le porte-outil vers l'avant, vers le bas dans la direction d'entraînement, sachant que, en observant dans la direction de déplacement, la roue se trouve derrière le porte-outil et la poutre étant en outre susceptible de tourner, de manière que, par une rotation de la poutre (1), l'inclinaison du porte-outil (9) puisse être modifiée, modifiant à son tour la relation de hauteur entre la roue et l'outil (13 ; 14 ; 15) pour modifier la profondeur de travail.

2. Support d'outils selon la revendication 1, **caractérisé en ce que** les ressorts (16) sont agencés sur le bras oscillant (4), de manière que, lors du déplacement du porte-outil vers l'arrière depuis la position de travail, le levier du ressort ou des ressorts est réduit, agissant à l'encontre de l'augmentation de la force élastique résultant de l'extension du ressort, de manière que les forces requises lors du passage d'une pierre soient modérées et permettent un échappement par écartement par oscillation de l'outil se faisant en douceur.

3. Support d'outils selon l'une quelconque des revendications précédentes, **caractérisé en ce que** le porte-outil, ainsi que les outils correspondants, comprennent plusieurs trous de montage, pouvant coopérer avec la rotation de la poutre, pour permettre d'avoir différents angles et profondeurs de montage.

4. Support d'outils selon l'une quelconque des revendications précédentes, **caractérisé en ce que** les bras oscillants (4, 5) ont des profilé en forme de I et/ou de U, de manière à obtenir une grande rigidité.

5. Support d'outils, **caractérisé en ce que** le porte-outil comprend des trous à boulons, ou d'autres possibilités de montage, pour compléter les outils latéralement à et/ou derrière le porte-outil ou la roue.

6. Support d'outils selon l'une quelconque des revendications précédentes, **caractérisé en ce qu'**il est muni de moyens utilisant le mouvement entre les différentes parties, de manière à obtenir, lors de la levée du support d'outils, des déplacements, par exemple pour nettoyer les outils et/ou pour fermer des ouvertures ménagées dans ceux-ci.

7. Support d'outils selon l'une quelconque des revendications précédentes, **caractérisé en ce que** les bras oscillant (4, 5) sont agencés chacun l'un derrière l'autre, dans la direction de déplacement du support d'outils.
